# EUROPEAN PATENT APPLICATION

(11) **EP 4 675 049 A1**
(43) Date of publication of application: **07.01.2026**
(21) Application number: 24306087.8
(22) Date of filing: 02.07.2024
(51) Int. Cl.: E02D 27/42

(54) **A MONOPILE FOR SUPPORTING A WIND TURBINE, COMPRISING AN ENVELOPE DEFINING AT LEAST ONE HOLE EXTENDING FROM A RADIALLY OUTER SURFACE TO A RADIALLY INNER SURFACE**

(71) Applicant: TotalEnergies OneTech, 92400 Courbevoie (FR)
(72) Inventor: VACCARONE, Stefano, 92400 COURBEVOIE (FR)
(74) Representative: Lavoix

(57) **Abstract**

A monopile adapted for supporting a wind turbine, the monopile defining a central axis (X) and comprising an envelope (22) having a radially outer surface (28), a radially inner surface (30), a radially median surface (M), and at least one hole (20) defining a center (O), and being delimited by an edge (32) defining a loop (L) on the radially median surface, the loop defining a shape in orthogonal projection on a plane (P') tangent to the radially median surface at the center.

The shape (S) is encompassed between a circle (C) and a rectangle (RR), both centered on said center, the circle having a diameter (D2) and a perimeter.

The rectangle has a length (L1) equal to or larger than the diameter and smaller than the diameter multiplied by 1.20, and has a width (L2) equal to the diameter.

The shape has a length equal to said perimeter multiplied by a value comprised between 1.10 and 1.25.

## Description

### FIELD OF THE DISCLOSURE

The present invention relates to a monopile adapted for supporting a wind turbine, the monopile defining a central axis intended to be vertical, the monopile comprising an envelope fully surrounding the central axis and having a radially outer surface and a radially inner surface with respect to the central axis, the envelope defining at least one hole extending from the radially outer surface to the radially inner surface.

The present invention also relates to an assembly comprising a wind turbine and such a monopile, and to an installation method of such an assembly.

### BACKGROUND

Monopiles are a known and appreciated technical solution for supporting wind turbines, especially the offshore ones in rather shallow waters. Monopiles work as a mast, with an upper extremity connected either to a transition piece, or directly to a wind turbine, and lower extremity penetrating in the seabed or connected to an anchoring structure.

Monopiles are very large structures, with a height up to 120m, and a diameters currently designed to around 12m, and even beyond. The monopiles carry huge environmental loads and have to withstand in particular huge bending stresses along their structure.

Monopiles usually comprise openings forming passages between an interior volume and the exterior, for example for cables, as well as air and water recirculation. These openings are sources of may cause or increase structural fatigue of the monopiles.

One known solution to overcome this issue consists in increasing the thickness of the monopile around the openings, usually over large sections of the monopile known as "cans", above and below each opening.

This requires a larger amount of steel and increases purchasing and manufacturing costs. This also increases the weight of the monopile and makes the monopile more challenging to transport toward an installation site and to erect.

An aim of the invention is to overcome or reduce the above mentioned issues, by providing a monopile adapted for supporting a wind turbine, and cheaper to manufacture and to install than the existing ones.

### BRIEF SUMMARY OF THE DISCLOSURE

To this end, the invention proposes a monopile adapted for supporting a wind, the monopile defining a central axis intended to be vertical, the monopile comprising an envelope fully surrounding the central axis and having a radially outer surface and a radially inner surface with respect to the central axis, the envelope having a thickness and defining a radially median surface in between the radially outer surface and the radially inner surface, and at least one hole extending from the radially outer surface to the radially inner surface, the hole defining a center on the radially median surface, and being delimited by an edge defining a loop on the radially median surface, the loop defining a shape in orthogonal projection on a plane tangent to the radially median surface at the center, wherein:
- the shape is encompassed between a circle and a rectangle in the plane,
- the circle and the rectangle are centered on said center, the circle having a diameter and a perimeter,
- the rectangle has a length equal to or larger than the diameter, and smaller than the diameter multiplied by 1.20, and
- the rectangle has a width equal to the diameter, and
- the shape has a length equal to said perimeter multiplied by a value comprised between 1.10 and 1.25.

In other embodiments, the monopile may comprise one or several of the following features, taken in isolation or any technically feasible combination:
- the shape defines four lobes extending away from the center respectively in four corners of the rectangle;
- the shape has a minimum radius of curvature that is larger than the diameter times 0.10;
- the length of the rectangle is along a first axis included a radial plane containing the center;
- the rectangle is a square, the length being equal to the diameter;
- the shape is symmetrical with respect to a first axis included a radial plane containing the center;
- the shape is symmetrical with respect to a second axis perpendicular to a radial plane containing the center;
- the edge has a radially outer portion and a radially inner portion that are smoothed with a radius of curvature ranging between 2.0% and 10% of the thickness, and being equal to or larger than 2.0 mm;
- the radially median surface is cylindrical;
- the monopile has an outer diameter comprised between 7.0 and 14.0 meters, the outer diameter being defined in a plane crossing the hole;
- the diameter of the circle is comprised between 300 mm and 700 mm, and/or;
- the thickness is comprised between 60 mm and 160 mm;
- the edge has a radially median portion which is parallel to a same piercing direction along all the loop; and
- the piercing direction defines an angle with the central axis comprised between 40° and 50°, the piercing direction descending from the radially inner surface toward the radially outer surface when the central axis is vertical, the hole being intended to receive an electric cable exiting the monopile and inclined downwards.

The invention also proposes an assembly comprising:
- a monopile as described above,
- a wind turbine supported by the monopile, and
- at least an electric cable exiting the monopile via the hole.

The invention also proposes a manufacturing method for obtaining a monopile as described above, comprising:
- obtaining steel plates,
- curving the plates around the central axis in order to obtain curved plates,
- assembling the curved plates in order to obtain a can,
- cutting the hole in one of the curved plates or in the can, and
- using at least the can in order to obtain the envelope.

The invention also proposes another manufacturing method for obtaining a monopile as described above, comprising:
- obtaining steel plates,
- cutting an initial hole in one of the plates,
- curving the plates around the central axis in order to obtain curved plates and the hole,
- assembling the curved plates in order to obtain a can, and
- using at least the can in order to obtain the envelope.

### BRIEF DESCRIPTION OF THE DRAWING(S)

The disclosure and its advantages will be better understood upon reading the following description, given solely by way of example and with reference to the appended drawings, in which:
- Figure 1 is a schematic side view of an assembly according to the invention,
- Figure 2 is a schematic cross-section of a monopile represented in Figure 1 along a horizontal plane crossing a hole in the monopile,
- Figure 3, on the right, is a cross-section of the hole shown in Figure 2 along a vertical radial plane, and, on the left, is a front view (an orthogonal projection on a plane tangent to an envelope of the monopile) of a loop defined by the hole on a median surface extending within the envelope. Figure 3 is also an illustration of the manufacturing methods, and
- Figure 4 is a partial view analogous to the right part of Figure 3, showing an edge of a hole according to a variant of the hole shown in Figures 2 and 3.

### DETAILED DESCRIPTION

### Assembly

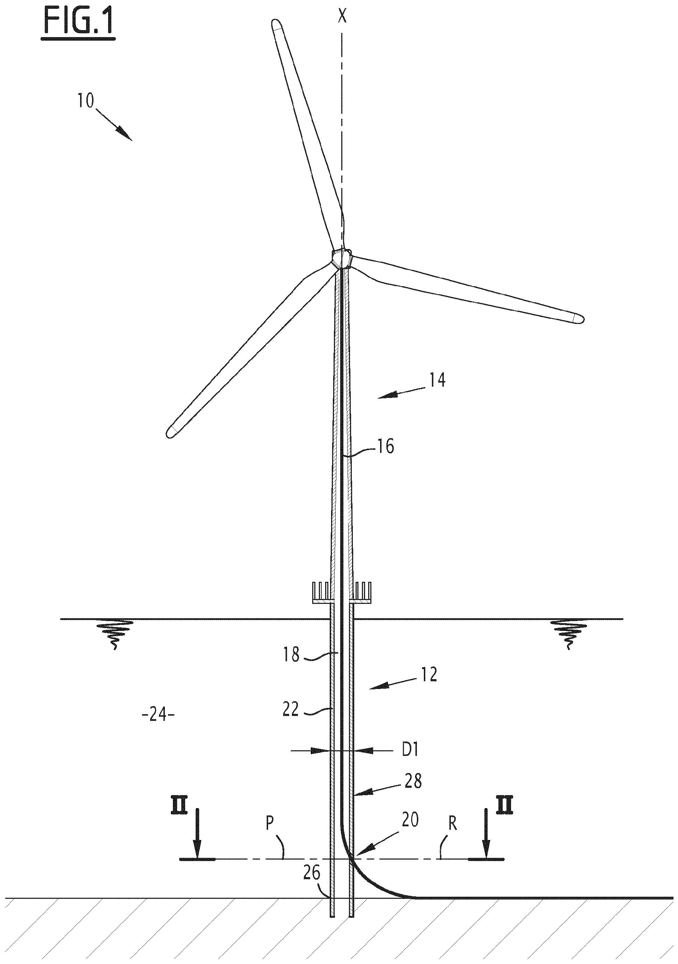

With reference to Figure 1, an assembly 10 according to the invention will now be described.

The assembly 10 comprises a monopile 12, and a wind turbine 14 supported by the monopile.

In the example, the assembly 10 comprises an electric cable 16 exiting an interior volume 18 via a hole 20 in an envelope 22 of the monopile 12, the interior volume 18 being defined by the envelope 22.

As a variant (not shown), the monopile 12 supports another piece of equipment than a wind turbine, for example an electric substation.

### Monopile

The monopile 12 is for example surrounded by a body of water 24, which may be an ocean, a sea or a lake.

The monopile 12 defines a central axis X intended to be vertical or almost vertical when the monopile 12 is installed.

The monopile 12 for example has a cylindrical shape (based on a circle).

As variants (not shown), the monopile 12 may be frustoconical or have a cylindrical shape with a non circular basis 26, for example an elliptical basis.

The monopile 12 for example has an outer diameter D1 comprised between 7.0 and 14.0 meters, the diameter D1 being defined in a plane P crossing the hole 20.

The envelope 22 fully surrounds the central axis X and has a radially outer surface 28 and a radially inner surface 30 with respect to the central axis X, which are both cylindrical in the example.

The envelope 22 has a thickness T, at least in the plane P, for example comprised between 60 and 160 mm.

The envelope 22 defines a radially median surface M in between the radially outer surface 28 and the radially inner surface 30. For example, the radially median surface M is at the same distance of the radially outer surface 28 and of the radially inner surface 30 in planes perpendicular to the central axis X, such as the plane P.

As a variant (not shown), the envelope 22 defines more than one hole, for example two, three, or more than three holes.

In the example, the radially median surface M is cylindrical.

### Hole in the monopile

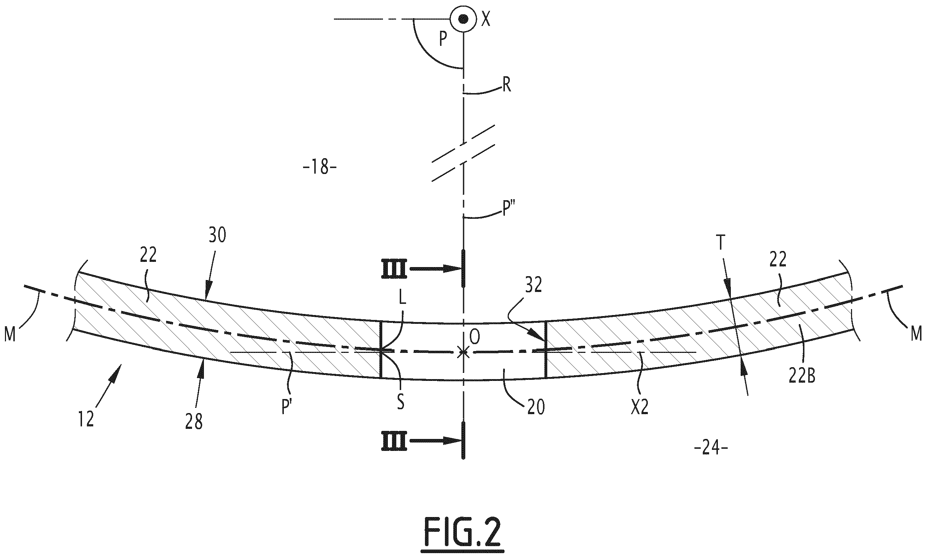

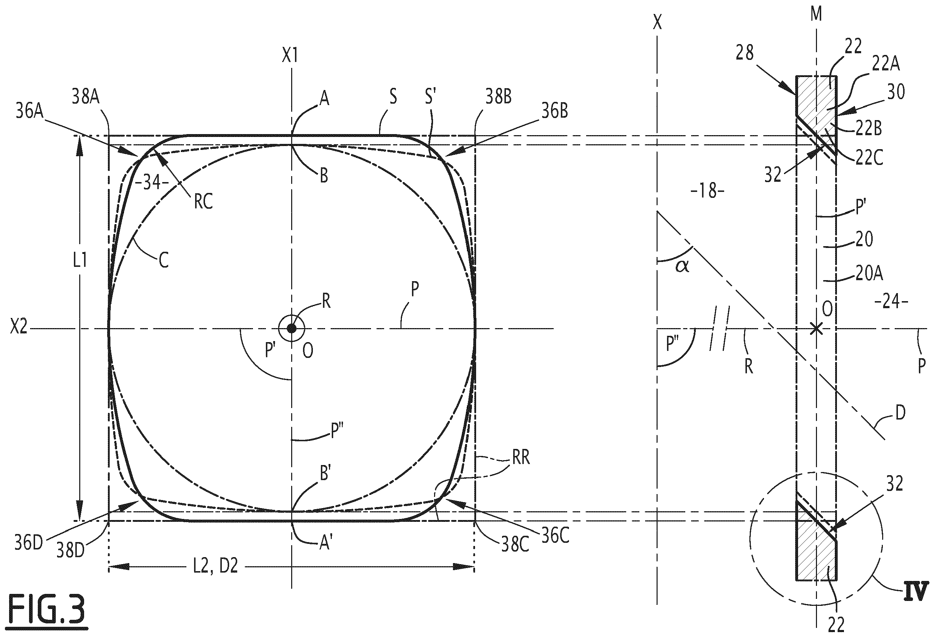

As shown in Figures 2 and 3, the hole 20 is defined by the envelope 22 and extends from the radially outer surface 28 to the radially inner surface 30.

The hole 20 defines a center O on the radially median surface M, and is delimited by an edge 32 defining a loop L on the radially median surface M.

In a particular embodiment (not shown), the hole 20 does not serve as a passage for an electric cable, but for another piece of equipment or simply for air and/or water circulation.

The loop L defines a shape S in orthogonal projection on a plane P' tangent to the radially median surface M at the center O. In the example, the orthogonal projection on the plane P' is equivalent to a projection along a radial direction R containing the center O and perpendicular to the central axis X.

The loop L is contained in the median surface M, which is not flat, while the shape S is contained in the plane P' which is by nature flat. The shape S can be seen as a front view of the loop L.

### Shape of the hole

The shape S is encompassed between a circle C and a rectangle RR in the plane P', the circle C and the rectangle RR being centered on said center O. In other words, the shape S is located in an area 34 that does not extend further than the rectangle RR with respect to the center O, and does not extend closer to the center O than the circle C.

The circle C has a diameter D2 and a perimeter.

The rectangle RR has a length L1 equal to or larger than the diameter D2, and smaller than the diameter D2 multiplied by 1.20. The rectangle RR has a width L2 equal to the diameter D2.

Advantageously, the length L1 of the rectangle RR is along a first axis X1 included in a radial plane P" containing the center O.

In a particular embodiment (not shown), the rectangle RR is a square, the length L1 being equal to the diameter D2.

The shape S has a length equal to the perimeter (of the circle C) multiplied by a value comprised between 1.10 and 1.25. In other words, the length is comprised between 110% and 125% of the perimeter p.

In Figure 3, an alternative shape S' is also shown, which satisfies the same criteria as the shape S.

In the example, the shape S crosses the rectangle RR at points A and A' located along the first axis X1 of the rectangle RR.

The shape S' crosses the circle C at points B and B' along the first axis X1. The shape S' is less "stretched" along the axis X' than the shape S.

The shape S advantageously defines four lobes 36A, 36B. 36C, 36D extending away from the center O respectively in four corners 38A, 38B, 38C, 38D of the rectangle RR.

For example, the shape S is preferably symmetrical with respect to the first axis X1, and preferably symmetrical with respect to a second axis X2 of the rectangle RR, the second axis X2 being perpendicular to the radial plane P".

The second axis X2 is thus perpendicular to the first axis X1 and both cross each other at the center O of the hole 20.

Advantageously, the shape S has a minimum radius of curvature RC that is larger than the diameter D2 multiplied by 0.10.

In a particular embodiment, the shape S is convex.

In another particular embodiment (not shown), the shape S may include one or several concave portions.

The diameter D2 is for example comprised between 300 and 700 mm.

### Edge of the hole

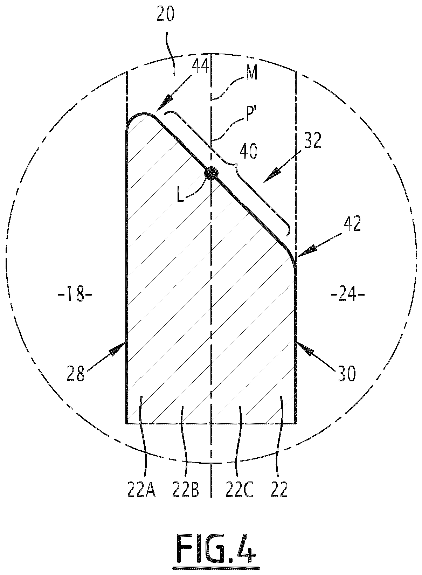

Advantageously, the edge 32 of the hole 20 has a radially median portion 40 (Figure 4) which is parallel to a same piercing direction D along all the loop L.

The edge 32 has a radially outer portion 42 and a radially inner portion 44 that are advantageously smoothed with a radius of curvature ranging for example between 2.0% and 10% of the thickness T, and being preferably equal to or larger than 2.0 mm.

The piercing direction D for example defines an angle α with the central axis X comprised between 40° and 50°, the piercing direction D descending from the radially inner surface 30 toward the radially outer surface 28. This allows the hole 20 to receive the electric cable 16 which is for example inclined downwards.

As a variant (not shown), the piercing direction D may be any direction.

In a particular embodiment (not shown), the piercing direction D is approximately perpendicular locally to the envelope 22.

### Manufacturing method

A method of manufacturing the monopile 12 will now be described with reference to Figures 3 and 4.

According to a first embodiment, the method comprises obtaining a steel plates 22A, and curving the plates 22A around the central axis X in order to obtain a curved plates 22B.

The curved plates 22B are then assembled to obtain a can 22C

The hole 20 is cut in one of the curved plates 22B or in the can 22C, that is to say in a curved piece of metal.

The can 22C is used in order to obtain the envelope 22.

In practice, several cans analogous to the can 22C may be welded along the central axis X in order to obtain the envelope 22.

The hole 20 may advantageously be cut by existing numerical (automated) oxy-cutting machines (not shown).

Smoothing the radially outer portion 28 and the radially inner portion 30 of the edge 32 may be achieved using machining tools or manual grinding tools (not shown).

A second embodiment of the method will now be described also with reference to Figures 3 and 4. The second embodiment is analogous to the first embodiment, so only the differences will be described hereafter.

The method comprises obtaining the steel plates 22A, and cutting an initial hole 20A in at one of the plates 22A, that is to say in a flat piece of metal.

The initial hole 20A has the same features as the hole 20 described above.

The plates 22A are then curved around the central axis X in order to obtain the curved plates 22B, which deforms the in initial hole 20A into the hole 20. The curved plates 22B are assembled in order to obtain the can 22B

The hole 20 keeps most of the features of the initial hole 20A, since the curvature of the envelope 22 is small compared with the dimensions of the hole 20.

### Advantages

Thanks to the above described features, the monopile 12 is adapted for supporting the wind turbine 14, and cheaper to manufacture and install than existing monopiles.

Indeed, the particular shape S of the hole 20 allows minimizing stress concentration along the edge 32 and in the vicinity of the hole. As a consequence, all other parameters being equal, the thickness T of the envelope 22 can be reduced. Less steel is needed to manufacture the monopile 12, and the monopile weight is decreased, which also facilitates its transport and installation.

### Example of savings

Thanks to the invention, the thickness T is reduced around a series of openings, for example the cable entry hole 20, a water replenishment hole (not shown) and an air exchange hole (not shown), and in adjacent cans.

This may lead to a mass decrease of approximately 80 tonnes (-5%) for a large monopile. In a windfarm (not shown) including about 100 monopiles, assuming manufacturing costs of about 3000 €/tonne, the overall savings amount to about 24 million €, and potentially more depending on the specific design of the monopiles.

## Claims

1. A monopile (12) adapted for supporting a wind turbine (14), the monopile (12) defining a central axis (X) intended to be vertical, the monopile (12) comprising an envelope (22) fully surrounding the central axis (X) and having a radially outer surface (28) and a radially inner surface (30) with respect to the central axis (X), the envelope (22) having a thickness (T) and defining a radially median surface (M) in between the radially outer surface (28) and the radially inner surface (30), and at least one hole (20) extending from the radially outer surface (28) to the radially inner surface (30), the hole (20) defining a center (O) on the radially median surface (M), and being delimited by an edge (32) defining a loop (L) on the radially median surface (M), the loop (L) defining a shape (S) in orthogonal projection on a plane (P') tangent to the radially median surface (M) at the center (O), **characterized in that**:
- the shape (S) is encompassed between a circle (C) and a rectangle (RR) in the plane (P'),
- the circle (C) and the rectangle (RR) are centered on said center (O), the circle (C) having a diameter (D2) and a perimeter,
- the rectangle (RR) has a length (L1) equal to or larger than the diameter (D2), and smaller than the diameter (D2) multiplied by 1.20, and
- the rectangle (RR) has a width (L2) equal to the diameter (D2), and
- the shape (S) has a length equal to said perimeter multiplied by a value comprised between 1.10 and 1.25.

2. The monopile (12) according to claim 1, wherein the shape (S) defines four lobes (36A, 36B, 36C, 36D) extending away from the center (O) respectively in four corners (38A, 38B, 38C, 38D) of the rectangle (RR).

3. The monopile (12) according to claim 1 or 2, wherein the shape (S) has a minimum radius of curvature (RC) that is larger than the diameter (D2) times 0.10.

4. The monopile (12) according to any one of claims 1 to 3, wherein the length (L1) of the rectangle (RR) is along a first axis (X1) included a radial plane (P") containing the center (O).

5. The monopile (12) according to any one of claims 1 to 3, wherein the rectangle (RR) is a square, the length (L1) being equal to the diameter (D2).

6. The monopile (12) according to any one of claims 1 to 5, wherein the shape (S) is symmetrical with respect to a first axis (X1) included a radial plane (P") containing the center (O).

7. The monopile (12) according to any one of claims 1 to 6, wherein the shape (S) is symmetrical with respect to a second axis (X2) perpendicular to a radial plane (P") containing the center (O).

8. The monopile (12) according to any one of claims 1 to 7, wherein the edge (32) has a radially outer portion (42) and a radially inner portion (44) that are smoothed with a radius of curvature ranging between 2.0% and 10% of the thickness (T), and being equal to or larger than 2.0 mm.

9. The monopile (12) according to any one of claims 1 to 8, wherein the radially median surface (M) is cylindrical.

10. The monopile (12) according to any one of claims 1 to 9, wherein:
- the monopile (12) has an outer diameter (D1) comprised between 7.0 and 14.0 meters, the outer diameter (D1) being defined in a plane (P) crossing the hole (20),
- the diameter (D2) of the circle (C) is comprised between 300 mm and 700 mm, and/or
- the thickness (T) is comprised between 60 mm and 160 mm.

11. The monopile (12) according to any one of claims 1 to 10, wherein the edge (32) has a radially median portion (40) which is parallel to a same piercing direction (D) along all the loop (L).

12. The monopile (12) according to claim 11, wherein the piercing direction (D) defines an angle (α) with the central axis (X) comprised between 40° and 50°, the piercing direction (D) descending from the radially inner surface (30) toward the radially outer surface (28) when the central axis (X) is vertical, the hole (20) being intended to receive an electric cable (16) exiting the monopile (12) and inclined downwards.

13. An assembly (10) comprising:
- a monopile (12) according to any one of claims 1 to 12,
- a wind turbine (14) supported by the monopile (12), and
- at least an electric cable (16) exiting the monopile (12) via the hole (20).

14. A manufacturing method for obtaining a monopile according to any one of claims 1 to 12, comprising:
- obtaining steel plates (22A),
- curving the plates (22A) around the central axis (X) in order to obtain curved plates (22B),
- assembling the curved plates (22B) in order to obtain a can (22C),
- cutting the hole (20) in one of the curved plates (22B) or in the can (22C), and
- using at least the can (22B) in order to obtain the envelope (22).

15. A manufacturing method for obtaining a monopile according to any one of claims 1 to 10, comprising:
- obtaining steel plates (22A),
- cutting an initial hole (20A) in one of the plates (22A),
- curving the plates (22A) around the central axis (X) in order to obtain curved plates (22B) and the hole (20),
- assembling the curved plates (22B) in order to obtain a can (22C), and
- using at least the can (22C) in order to obtain the envelope (22).
